# FASCICULE DE BREVET EUROPEEN

(11) **EP 1 891 618 B1**
(45) Date de publication et mention de la délivrance du brevet: **22.10.2008**
(21) Numéro de dépôt: 06764769.3
(22) Date de dépôt: 12.06.2006
(51) Int. Cl.: G08G 5/04, B64D 43/00, G01C 23/00

(54) **PROCEDE ET SYSTEME D AIDE AU PILOTAGE D UN AERONEF VOLANT A BASSE ALTITUDE**
VERFAHREN UND SYSTEM ZUR HILFE BEI DER FLUGKONTROLLE EINES TIEFFLIEGENDEN FLUGZEUGS
METHOD AND SYSTEM FOR ASSISTING FLIGHT CONTROL OF A LOW-FLYING AIRCRAFT

(30) Priorité: 14.06.2005 FR 0505983
(43) Date de publication de la demande: 27.02.2008
(73) Titulaire: AIRBUS France, 31060 Toulouse Cédex (FR)
(72) Inventeur: BOUCHET, Christophe, F-31000 Toulouse (FR); DEMORTIER, Jean-Pierre, F-32200 Maurens (FR); ARTINI, Franck, F-31000 Toulouse (FR)
(74) Mandataire: Hauer, Bernard
(86) Numéro de dépôt international: PCT/FR2006/001319
(87) Numéro de publication internationale: WO 2006/134256

(56) Documents cités:
- FR-A- 2 607 948
- FR-A- 2 658 636
- US-A- 5 555 175

## Description

La présente invention concerne un procédé et un système d'aide au pilotage d'un aéronef volant à basse altitude.

Dans le cadre de la présente invention, on entend par vol à basse altitude un vol le long d'une trajectoire de vol (à basse altitude) permettant à un aéronef de suivre au plus près le terrain survolé, notamment pour éviter de se faire repérer. Une telle trajectoire de vol à basse altitude est donc située à une hauteur de terrain prédéterminée, par exemple 500 pieds (environ 150 mètres).

Bien que non exclusivement, la présente invention s'applique plus particulièrement à un avion de transport militaire qui présente un rapport poussée/ poids faible et une forte inertie, et dont les temps de manoeuvre sont en général relativement lents. En cas de détection d'une menace sol-air (visuellement ou bien par un système de bord électronique de contre-mesures), un tel avion de transport militaire doit être capable, pour des raisons évidentes de sécurité, d'effectuer rapidement une modification de route, modification qui n'était pas programmée à l'origine.

Or, la détermination d'une trajectoire de vol à basse altitude requiert une puissance de calcul très élevée de la part des systèmes de bord de l'aéronef. Comme une modification de route permettant de quitter au plus tôt une zone hostile doit pouvoir être effectuée avec un préavis quasi nul, le pilote n'est pas en mesure de replanifier manuellement une nouvelle route. En effet, premièrement, une telle manipulation demande du temps (replanification point par point), et deuxièmement le calcul de la trajectoire à basse altitude sur une nouvelle route latérale demande également un certain délai. Ces différents temps sont de l'ordre de plusieurs secondes, ce qui peut être beaucoup trop long dans certaines situations pour permettre à l'aéronef de s'éloigner d'une zone hostile, en particulier lors d'une menace de type sol-air précitée.

La présente invention a pour objet de remédier à ces inconvénients. Elle concerne un procédé d'aide au pilotage d'un aéronef volant à basse attitude.

A cet effet, selon l'invention, ledit procédé est remarquable en ce que l'on réalise, de façon automatique et répétitive, les opérations suivantes :
a) on détermine au moins une trajectoire d'évitement, au moins sur une distance prédéterminée à l'avant de l'aéronef, ladite trajectoire d'évitement correspondant à une trajectoire latérale à basse altitude et présentant au moins un virage latéral ;
b) on détermine le profil du terrain situé sous cette trajectoire d'évitement ;
c) on détermine, en fonction dudit profil du terrain, au moins une première pente limite correspondant à une pente que l'aéronef doit voler pour pouvoir survoler ledit terrain sur toute ladite distance prédéterminée le long de ladite trajectoire d'évitement ; et
d) on présente au pilote, sur un écran de visualisation, au moins un premier signe caractéristique qui représente ladite première pente limite et qui est associé à une échelle de pente, à laquelle est également associé un symbole illustrant le vecteur vitesse sol de l'aéronef.

Ainsi, grâce à l'invention, le pilote dispose, à tout temps et sans action de sa part, d'au moins une trajectoire d'évitement permettant de réaliser une manoeuvre de vol d'évitement, notamment en cas de menace subite, en particulier une menace sol-air. Une telle trajectoire d'évitement permet alors au pilote de s'éloigner de la menace, tout en continuant à voler à basse altitude (selon ladite trajectoire d'évitement), et ceci en toute sécurité puisque le pilote a également connaissance de la pente limite à laquelle il doit faire voler l'aéronef pour survoler le terrain le long de ladite trajectoire d'évitement. On notera, de plus, que ledit symbole illustrant le vecteur vitesse sol fournit au pilote une indication sur la pente sol instantanée de l'aéronef.

Ainsi, grâce à l'invention, lors d'une manoeuvre d'évitement, l'aéronef peut continuer à voler à basse altitude avec la même intégrité que lors du vol selon la trajectoire à basse altitude initiale (calculée le long du plan de vol initial).

Dans un premier mode de réalisation, ladite première pente limite correspond à une pente minimale que l'aéronef doit voler pour pouvoir survoler ledit terrain sur toute ladite distance prédéterminée le long de ladite trajectoire d'évitement, indépendamment des performances dudit aéronef.

Dans ce premier mode de réalisation, de façon avantageuse :
- à l'étape c), on détermine, de plus, au moins une seconde pente limite correspondant à une pente maximale volable par l'aéronef, en fonction de conditions de vol prédéterminées et de performances effectives dudit aéronef. Dans ce cas, dans une première variante de réalisation, lesdites conditions de vol prédéterminées sont relatives à un fonctionnement normal de tous les moteurs de l'aéronef, tandis que dans une seconde variante de réalisation, lesdites conditions de vol prédéterminées sont relatives à une panne anticipée d'un moteur de l'aéronef ; et
- à l'étape d), on présente sur l'écran de visualisation au moins un second signe caractéristique qui représente ladite seconde pente limite et qui est également associé à ladite échelle de pente.

Ainsi, grâce auxdits premier et second signes caractéristiques, le pilote sait si la pente qui lui est demandée (premier signe caractéristique) pour survoler le terrain le long de la trajectoire d'évitement reste compatible avec les meilleures performances de montée (second signe caractéristique) en terme de pente qui sont disponibles à tout moment (en fonction des performances effectives de l'aéronef), et ceci soit avec tous les moteurs en fonctionnement, soit par anticipation avec l'un des moteurs en panne dudit aéronef (qui est de type multimoteur dans ce cas).

Dans ledit premier mode de réalisation, dans une variante de réalisation préférée :
- à l'étape a), on détermine une pluralité de trajectoires d'évitement présentant chacune un virage différent. Les virages peuvent être positifs ou négatifs, c'est-à-dire dans un sens ou dans l'autre. Une trajectoire d'évitement peut également présenter un virage nul, l'aéronef volant alors tout droit ;
- à l'étape b), on détermine les profils du terrain sous ces trajectoires d'évitement ;
- à l'étape c), on détermine une pluralité de premières pentes limites associées respectivement à ladite pluralité de trajectoires d'évitement ; et
- à l'étape d), on présente sur l'écran de visualisation une pluralité de premiers signes caractéristiques représentant respectivement ladite pluralité de premières pentes limites, ladite échelle de pente étant présentée verticalement et lesdits premiers signes caractéristiques étant présentés horizontalement l'un à côté de l'autre en fonction du sens et de la valeur du virage correspondant.

De plus, dans ce cas, avantageusement :
- à l'étape c), on détermine une pluralité de secondes pentes limites associées respectivement à ladite pluralité de trajectoires d'évitement ; et
- à l'étape d), on présente sur l'écran de visualisation une pluralité de seconds signes caractéristiques représentant respectivement ladite pluralité de secondes pentes limites, lesdits seconds signes caractéristiques étant présentés horizontalement l'un à côté de l'autre en fonction du sens et de la valeur du virage correspondant de sorte que des premier et second signes caractéristiques qui sont associés à une même trajectoire d'évitement sont situés horizontalement au même niveau.

Ainsi, on propose au pilote une pluralité de trajectoires d'évitement, auxquelles on a associé à chaque fois une première pente limite et éventuellement une seconde pente limite, ce qui permet au pilote de choisir la meilleure trajectoire d'évitement possible lors d'une manoeuvre d'évitement, tout en anticipant la configuration du terrain qu'il va rencontrer le long de cette trajectoire d'évitement choisie. En d'autres termes, l'aide apportée grâce à la présente invention consiste notamment à fournir au pilote, instantanément (ou avec un délai très court), une indication de la meilleure route à suivre en vol à basse altitude pour se protéger d'une menace qui vient d'être détectée et à lui confirmer si les performances de l'aéronef permettent telle ou telle option de trajectoire.

De façon avantageuse, on détermine un même nombre de trajectoires d'évitement présentant un virage vers la droite que de trajectoires d'évitement présentant un virage vers la gauche.

En outre, avantageusement :
- on prend en compte un nombre de trajectoires d'évitement permettant d'obtenir au moins une première courbe continue reliant ensemble lesdits premiers signes caractéristiques ; et/ou
- on prend en compte un nombre de trajectoires d'évitement permettant d'obtenir au moins une seconde courbe continue reliant ensemble lesdits seconds signes caractéristiques.

Par ailleurs, dans un second mode de réalisation, ladite première pente limite correspond à une pente à piquer maximale de l'aéronef à laquelle il peut descendre avant d'appliquer une remontée à plein manche arrière avec une puissance maximale de manière à pouvoir survoler ledit terrain. De plus, avantageusement, le premier signe caractéristique représentant ladite première pente limite est adapté au profil du terrain, en étant limité, soit par ledit profil du terrain (lors de l'interception dudit profil par ce premier signe caractéristique), soit par une valeur prédéterminée (en l'absence d'interception).

Dans ce second mode de réalisation, de façon avantageuse, lorsque ledit premier signe caractéristique atteint le symbole illustrant le vecteur vitesse sol, on émet un signal d'alerte.

En outre, avantageusement :
- à l'étape c), on détermine, de plus, la pente de montée la plus importante susceptible d'être volée par l'aéronef ; et
- à l'étape d), on présente sur l'écran de visualisation un signe auxiliaire représentant cette pente de montée la plus importante.

Par ailleurs, dans ce second mode de réalisation, lorsque l'aéronef est en virage :
- à l'étape c), on détermine, de plus, une pente limite auxiliaire qui correspond à une pente à piquer maximale de l'aéronef, à laquelle il peut descendre avant de réaliser une remise des ailes à plat puis d'appliquer une remontée à plein manche arrière avec une puissance maximale de manière à pouvoir survoler ledit terrain ; et
- à l'étape d), on présente sur l'écran de visualisation un signe auxiliaire représentant cette pente limite auxiliaire.

De plus, en complément ou en supplément, lorsque l'aéronef est en virage et qu'une remise des ailes à plat de l'aéronef est impossible, on émet un signal d'alerte correspondant.

En outre, avantageusement, lorsque l'aéronef est en virage, on présente sur l'écran de visualisation une indication de roulis qui indique au pilote le roulis à commander pour maintenir une trajectoire donnée.

Par ailleurs, dans une variante particulière dudit second mode de réalisation :
- à l'étape a), on détermine une pluralité de trajectoires d'évitement présentant chacune un virage différent ;
- à l'étape b), on détermine les profils du terrain sous ces trajectoires d'évitement ;
- à l'étape c), on détermine une pluralité de premières pentes limites associées respectivement à ladite pluralité de trajectoires d'évitement ; et
- à l'étape d), on présente sur l'écran de visualisation une pluralité de premiers signes caractéristiques représentant respectivement ladite pluralité de premières pentes limites, ladite échelle de pente étant présentée verticalement et lesdits premiers signes caractéristiques étant présentés horizontalement l'un à côté de l'autre en fonction du sens et de la valeur du virage correspondant.

Quel que soit le mode de réalisation considéré, ledit écran de visualisation est de préférence un écran d'un dispositif de visualisation tête haute. Ceci est très avantageux car, dans le cas d'une menace extérieure, le pilote essaie généralement de piloter l'aéronef en maintenant le regard dirigé vers l'environnement extérieur, en dehors du poste de pilotage. Ainsi, l'utilisation d'un dispositif de visualisation tête haute évite au pilote d'avoir à baisser le regard sur ses instruments de vol.

En outre, avantageusement, on est en mesure de supprimer la présentation des premiers signes caractéristiques présentés à l'étape d). Cette suppression peut être réalisée automatiquement ou manuellement, par exemple en cas de bonne visibilité. Aussi, à titre d'exemple, on peut limiter la présentation à des cas spécifiques, par exemple en cas de mauvaise visibilité.

En outre, dans une application particulière qui utilise le procédé de base précité et qui est destinée à proposer au pilote de manière automatique un routage :
- on détermine, pour chaque trajectoire d'évitement, une note qui est relative à au moins un critère prédéterminé (un écart latéral par rapport à un axe de vol défini par deux points de vol, une consommation de fuel minimisée, ...) ;
- on compare entre elles les notes ainsi déterminées ; et
- en fonction de cette comparaison, on sélectionne l'une desdites trajectoires d'évitement que l'on met en évidence.

Ainsi, grâce aux caractéristiques précédentes, le procédé conforme à l'invention est perfectionné de manière à permettre la détermination d'une trajectoire latérale optimale (routage). Bien entendu, lorsque la trajectoire optimale est déterminée et suivie par l'aéronef, le procédé de base conforme à l'invention peut continuer à être mis en oeuvre pour aider le pilote à réaliser une manoeuvre d'évitement en cas de menace subite.

La présente invention concerne également un système d'aide au pilotage d'un aéronef, par exemple d'un avion de transport militaire, volant à basse altitude.

Selon l'invention, ledit système est remarquable en ce qu'il comporte :
- des premiers moyens pour déterminer au moins une trajectoire d'évitement, au moins sur une distance prédéterminée à l'avant de l'aéronef, ladite trajectoire d'évitement correspondant à une trajectoire latérale à basse altitude et présentant au moins un virage latéral ;
- des deuxièmes moyens pour déterminer le profil du terrain situé sous cette trajectoire d'évitement ;
- des troisièmes moyens pour déterminer, en fonction dudit profil du terrain, au moins une première pente limite correspondant à une pente que l'aéronef doit voler pour pouvoir survoler ledit terrain sur toute ladite distance prédéterminée le long de ladite trajectoire d'évitement ; et
- des moyens d'affichage pour présenter, sur un écran de visualisation, au moins un premier signe caractéristique qui représente ladite première pente limite et qui est associé à une échelle de pente, à laquelle est également associé un symbole illustrant le vecteur vitesse sol de l'aéronef.

Dans un premier mode de réalisation, lesdits troisièmes moyens sont formés pour déterminer une première pente limite qui correspond à une pente minimale que l'aéronef doit voler pour pouvoir survoler ledit terrain sur toute ladite distance prédéterminée le long de ladite trajectoire d'évitement, indépendamment des performances dudit aéronef.

Dans ce cas, avantageusement :
- ledit système comporte, de plus, des quatrièmes moyens pour déterminer au moins une seconde pente limite correspondant à une pente maximale volable par l'aéronef, en fonction de conditions de vol prédéterminées et de performances effectives dudit aéronef ; et
- lesdits moyens d'affichage présentent, sur l'écran de visualisation, au moins un second signe caractéristique qui représente ladite seconde pente limite et qui est également associé à ladite échelle de pente.

De plus, dans une variante de réalisation particulière :
- lesdits premiers moyens déterminent une pluralité de trajectoires latérales d'évitement présentant chacune un virage différent ;
- lesdits deuxièmes moyens déterminent -les profils du terrain sous ces trajectoires d'évitement ;
- lesdits troisièmes moyens déterminent une pluralité de premières pentes limites associées respectivement à ladite pluralité, de trajectoires d'évitement ; et
- lesdits moyens d'affichage présentent, sur l'écran de visualisation, une pluralité de premiers signes caractéristiques représentant respectivement ladite pluralité de premières pentes limites, ladite échelle de pente étant présentée verticalement et lesdits premiers signes caractéristiques étant présentés horizontalement l'un à côté de l'autre en fonction du sens et de la valeur du virage correspondant.

En outre, dans une variante de réalisation particulière :
- lesdits quatrièmes moyens déterminent une pluralité de secondes pentes limites associées respectivement à ladite pluralité de trajectoires d'évitement ; et
- lesdits moyens d'affichage présentent, sur l'écran de visualisation, une pluralité de seconds signes caractéristiques représentant respectivement ladite pluralité de secondes pentes limites, lesdits seconds signes caractéristiques étant présentés horizontalement l'un à côté de l'autre en fonction du sens et de la valeur du virage correspondant de sorte que des premier et second signes caractéristiques qui sont associés à une même trajectoire d'évitement sont situés horizontalement au même niveau.

Par ailleurs, dans un second mode de réalisation préféré, lesdits troisièmes moyens sont formés pour déterminer une première pente limite qui correspond à une pente à piquer maximale de l'aéronef à laquelle il peut descendre avant d'appliquer une remontée à plein manche arrière avec une puissance maximale de manière à pouvoir survoler ledit terrain.

En outre, avantageusement :
- lesdits moyens d'affichage comprennent un dispositif de visualisation tête haute qui comporte ledit écran de visualisation ; et/ou
- ledit système comporte, de plus, des moyens de commande permettant d'engendrer et de supprimer la présentation des premiers signes caractéristiques sur ledit écran de visualisation.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 à 5 correspondent à un premier mode de réalisation. Plus précisément :

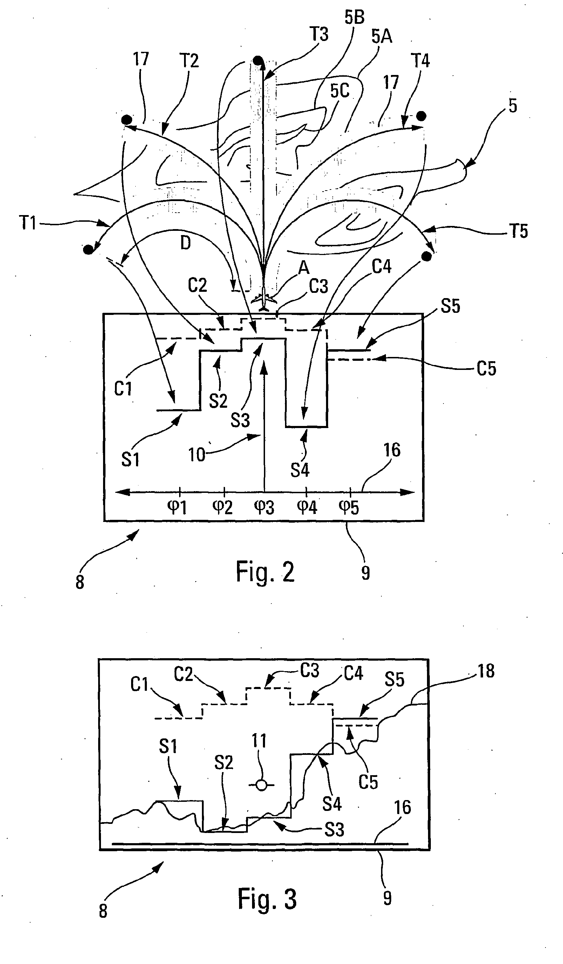

- la figure 2 montre des graphiques permettant de mettre en évidence les caractéristiques essentielles de ce premier mode de réalisation de l'invention ;
- la figure 3 montre un affichage mis en oeuvre conformément à ce premier mode de réalisation de l'invention ;

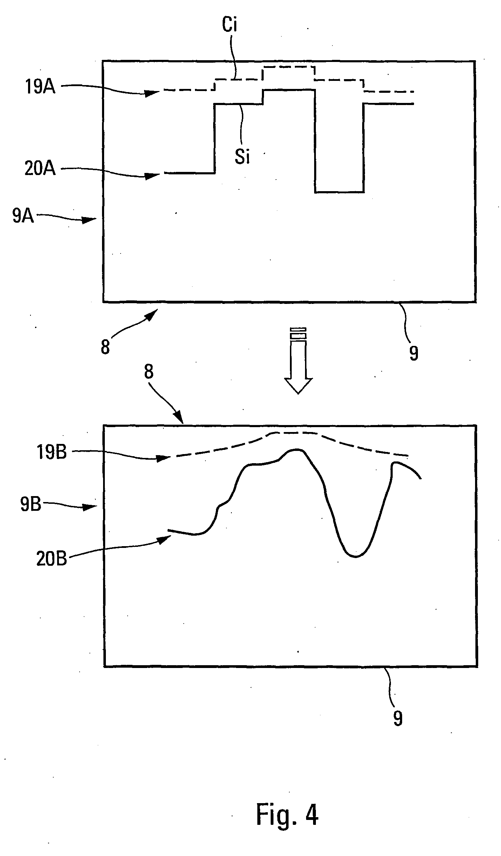

- la figure 4 représente deux illustrations permettant d'expliquer un mode d'affichage particulier ; et

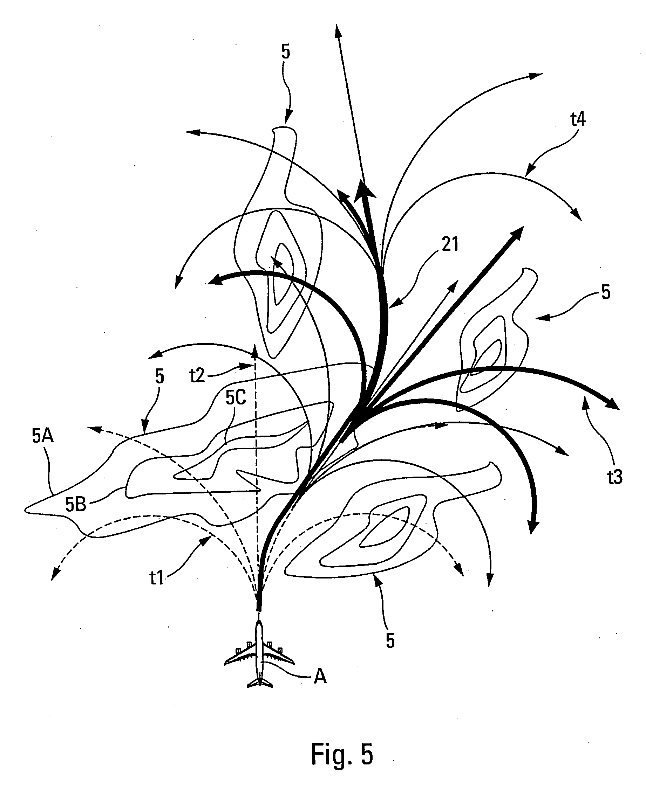

- la figure 5 illustre schématiquement une application particulière de la présente invention permettant de trouver une trajectoire latérale optimale.

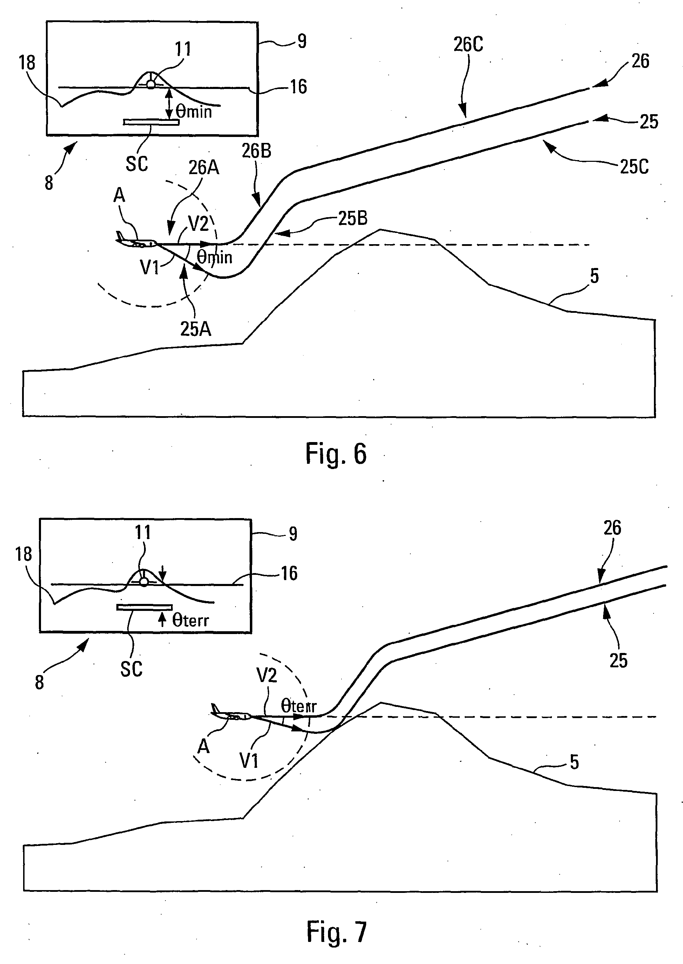

Les figures 6 à 11 correspondent à un second mode de réalisation. Plus précisément :
- les figures 6 et 7 permettent d'expliquer les caractéristiques essentielles dudit second mode de réalisation ;

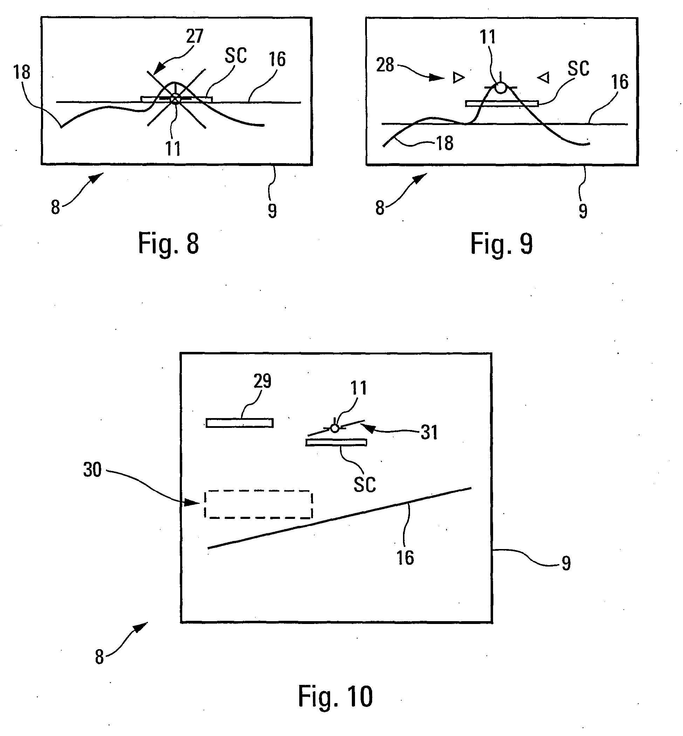

- les figures 8 à 10 montrent différents affichages présentant des caractéristiques particulières ; et

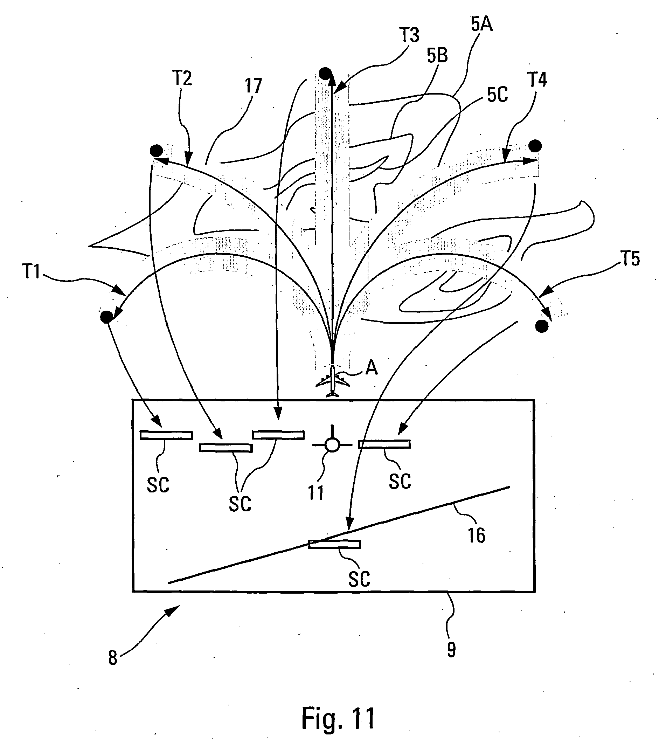

- la figure 11 illustre un graphique similaire à celui de la figure 2, mais appliqué audit second mode de réalisation.

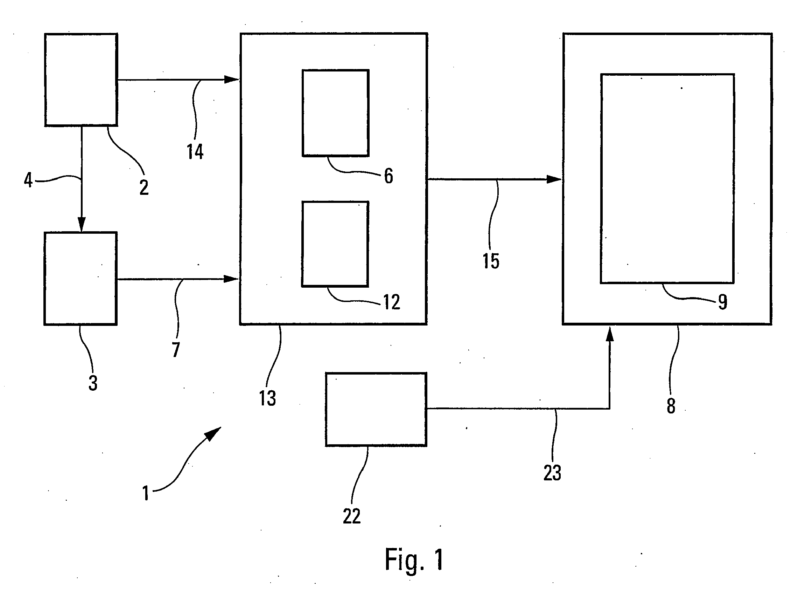

Le système 1 conforme à l'invention et représenté schématiquement sur la figure 1 est destiné à aider un pilote d'un aéronef A, par exemple d'un avion de transport militaire, qui vole à basse altitude, lors du pilotage dudit aéronef A.

Dans le cadre de la présente invention, on entend par vol à basse altitude un vol le long d'une trajectoire de vol (à basse altitude) permettant à l'aéronef A de suivre au plus près le terrain 5 survolé, notamment pour éviter de se faire repérer. Une telle trajectoire de vol à basse altitude est généralement située à une hauteur de terrain prédéterminée, par exemple 500 pieds (environ 150 mètres).

Selon l'invention, ledit système 1 comporte :
- des moyens 2 pour déterminer au moins une trajectoire d'évitement Ti, au moins sur une distance prédéterminée D à l'avant de l'aéronef A. Cette trajectoire d'évitement Ti correspond à un tronçon d'une trajectoire latérale à basse altitude ;
- des moyens 3 qui sont reliés par une liaison 4 auxdits moyens 2, pour déterminer le profil du terrain 5 qui est situé sous cette trajectoire d'évitement Ti ;
- des moyens 6 pour déterminer, en fonction dudit profil du terrain reçu desdits moyens 3 par une liaison 7, au moins une première pente limite qui correspond à une pente que l'aéronef A doit voler pour pouvoir survoler ledit profil du terrain 5 sur toute ladite distance D prédéterminée, le long de ladite trajectoire d'évitement Ti ; et
- des moyens d'affichage 8 pour présenter, sur un écran de visualisation 9, au moins un signe caractéristique Si qui représente ladite première pente limite et qui est associé à une échelle de pente 10, à laquelle est également associé un symbole 11 illustrant le vecteur vitesse sol de l'aéronef A (figures 2 et 3 par exemple).

Ainsi, le système 1 conforme à l'invention fournit au pilote, à tout moment et ceci sans action de sa part, au moins une trajectoire d'évitement Ti permettant de réaliser une manoeuvre (de vol) d'évitement, notamment en cas de menace subite, en particulier une menace sol-air. Une telle trajectoire d'évitement Ti permet alors au pilote d'éloigner l'aéronef A de la zone où apparaît cette menace, tout en continuant à voler à basse altitude (selon ladite trajectoire d'évitement Ti qui est du type à basse altitude), et ceci en toute sécurité puisque le pilote a également connaissance de la pente minimale (signe caractéristique Si) à laquelle il doit faire voler l'aéronef A pour survoler le profil du terrain 5 le long de ladite trajectoire d'évitement Ti.

On notera que ledit symbole 11 illustrant le vecteur vitesse sol fournit au pilote une indication sur la pente sol instantanée de l'aéronef A, comme précisé ci-dessous.

En outre, de préférence, l'écran de visualisation 9 desdits moyens d'affichage 8 est un écran d'un dispositif de visualisation tête haute, de type HUD ("Head Up Display" en anglais). Ceci est très avantageux car, lors d'une menace extérieure, le pilote essaie généralement de piloter l'aéronef A en maintenant son regard dirigé vers l'environnement extérieur, en dehors du poste de pilotage. Ainsi, l'utilisation d'un dispositif de visualisation tête haute évite au pilote, lors d'une telle menace extérieure, d'avoir à baisser le regard sur ses instruments de vol pour bénéficier de l'aide apportée par la présente invention.

On notera que le symbole 11 illustrant le vecteur vitesse sol, qui est affiché sur l'écran de visualisation 9 tête haute, indique la réponse de l'aéronef A à la consigne de pente sol fournie par un système de guidage usuel embarqué (pilote automatique ou directeur de vol) ou à la consigne pilote en vol manuel (sans pilote automatique, ni directeur de vol). L'écart entre ce vecteur vitesse sol et l'horizon inertiel (illustré par une ligne 16 sur les figures 2, 3 et 6 à 11) représente la pente sol instantanée de l'aéronef A. Sur les figures 3 et 6 à 9, on a également représenté la configuration du relief 18 du terrain 5 qui est visible à travers ledit écran de visualisation 9 tête haute.

Le système 1 conforme à l'invention comporte, de plus, des moyens de commande 22 (manuels ou automatiques) permettant d'engendrer et de supprimer la présentation de signes caractéristiques sur ledit écran de visualisation 9 (via une liaison 23).

Dans un premier mode de réalisation représenté sur les figures 2 à 5, lesdits troisièmes moyens 6 sont formés pour déterminer une première pente limite qui correspond à une pente minimale que l'aéronef A doit voler pour pouvoir survoler ledit terrain 5 sur toute ladite distance prédéterminée D le long de ladite trajectoire d'évitement T1 à T5, indépendamment des performances dudit aéronef A.

Dans ce cas, avantageusement :
- ledit système 1 comporte, de plus, des moyens 12 pour déterminer au moins une seconde pente limite qui correspond à une pente maximale volable par l'aéronef A, en fonction de conditions de vol prédéterminées et de performances effectives dudit aéronef A ; et
- lesdits moyens d'affichage 8 présentent, sur l'écran de visualisation 9, un signe caractéristique Ci qui représente ladite seconde pente limite et qui est également associé à ladite échelle de pente 10.

Dans ce cas, dans un premier mode de réalisation, lesdites conditions de vol prédéterminées sont relatives à un fonctionnement normal de tous les moteurs de l'aéronef A [conditions AEO ("All Engine Operative" en anglais)], tandis que dans un second mode de réalisation, lesdites conditions de vol prédéterminées sont relatives à une panne d'un moteur de l'aéronef [conditions OEI ("One Engine Inoperative" en anglais)] qui est alors de type multimoteur.

On peut également prévoir des moyens (non représentés) pour passer, automatiquement ou manuellement, de conditions OEI à des conditions AEO, et inversement. Il est également envisageable de prévoir simultanément sur un même écran de visualisation 9 au moins une paire de signes caractéristiques Ci différents, correspondant respectivement aux deux conditions OEI et AEO.

Ainsi, grâce auxdits signes caractéristiques Si et Ci, le pilote sait si la pente qui lui est demandée (signe caractéristique Si) pour survoler le profil du terrain 5 le long de la trajectoire d'évitement Ti reste compatible avec les meilleures performances effectives de montée (signe caractéristique Ci) en terme de pente, et ceci soit avec tous les moteurs en fonctionnement, soit avec l'un des moteurs en panne dudit aéronef A (qui est de type multimoteur dans ce cas).

On notera que la notion de pente (totale) prise en compte est équivalente à la notion d'énergie totale, c'est-à-dire à une notion qui est représentative de ce que serait l'énergie totale maximale de l'aéronef A, soit avec un moteur en panne (conditions OEI), soit avec tous les moteurs en fonctionnement (conditions AEO).

Bien entendu, les informations de pente (ou d'énergie totale) doivent prendre en compte les (éventuels) changements de route tels que prévus pour la trajectoire d'évitement Ti, car les performances de montée sont altérées par la présence d'un virage (précisément par le facteur de charge induit).

On notera que, pour un aéronef A présentant l'inertie d'un avion de transport tactique lent et lourd, il est nécessaire de tenir compte des performances réelles. Le fait de prendre en compte l'énergie totale permet de profiter au maximum des performances de l'aéronef A, en supposant un transfert d'énergie de l'énergie cinétique vers l'énergie potentielle (diminution de vitesse pour un gain de pente volable), ce qui suppose un calcul de pente maximale à une vitesse de meilleure pente. En outre, la prise en compte de la pente permet d'utiliser au mieux l'affichage conforme d'un écran de visualisation 9 tête haute en superposition du paysage vu par le pilote, comme précisé ci-dessous. De plus, l'influence d'une panne moteur est très sensible sur les performances de montée de l'aéronef A, ce qui met en évidence l'intérêt de pouvoir prendre en compte les conditions OEI par anticipation, même si l'aéronef A évolue avec tous les moteurs en fonctionnement.

Dans le mode de réalisation particulier représenté sur la figure 1, les moyens 6 et 12 sont intégrés dans une unité centrale 13 qui est reliée par des liaisons 14 et 15 respectivement aux moyens 2 et aux moyens d'affichage 8.

Dans un mode de réalisation particulier :
- lesdits moyens 2 déterminent une pluralité de trajectoires d'évitement Ti (i allant de 1 à n, n étant un entier supérieur à 1) présentant chacune un virage ϕi différent (qui peut être négatif, positif ou nul) ;
- lesdits moyens 3 déterminent les différents profils du terrain 5 sous toutes ces trajectoires d'évitement Ti ;
- lesdits moyens 6 déterminent une pluralité de premières pentes limites associées respectivement à ladite pluralité de trajectoires d'évitement Ti ; et
- lesdits moyens d'affichage 8 présentent, sur l'écran de visualisation 9, une pluralité de signes caractéristiques Si représentant respectivement ladite pluralité de premières pentes limites. L'échelle de pente 10 est présentée verticalement comme représenté sur la figure 2 (où n est égal à 5) et lesdits signes caractéristiques S1, S2, S3, S4, S5 sont présentés horizontalement l'un à côté de l'autre en fonction du sens et de la valeur du virage ϕi correspondant (ϕ1, ϕ2, ϕ3, ϕ4, ϕ5). Dans cet exemple, ϕ3 est considéré comme nul (vol tout droit), ϕ1 et ϕ2 sont négatifs (virage vers la gauche) et ϕ4 et ϕ5 sont positifs (virage vers la droite).

En outre, dans un mode de réalisation particulier :
- lesdits moyens 12 déterminent une pluralité de secondes pentes limites associées respectivement à ladite pluralité de trajectoires d'évitement Ti ; et
- lesdits moyens d'affichage 8 présentent, sur l'écran de visualisation 9, une pluralité de signes caractéristiques Ci (C1, C2, C3, C4 et C5 sur les figures 2 et 3) représentant respectivement ladite pluralité de secondes pentes limites. Lesdits signes caractéristiques Ci (C1 à C5) sont présentés horizontalement l'un à côté de l'autre en fonction du sens et de la valeur du virage ϕi correspondant de sorte que des signes caractéristiques Si et Ci (par exemple S2 et C2) qui sont associés à une même trajectoire d'évitement Ti (T2 dans cet exemple) sont situés horizontalement au même niveau (au niveau du virage ϕ2 pour l'exemple considéré). De plus, de préférence, les signes caractéristiques Ci et Si présentent tous la même largeur.

Latéralement, les trajectoires d'évitement Ti doivent prendre en compte un corridor 17 défini de part et d'autre, pour tenir compte d'erreurs liées aux systèmes de bord de l'aéronef A.

Le nombre maximal de trajectoires Ti calculables dépend des performances de calcul des moyens 2 embarqués. Quand le nombre n de trajectoires augmente, on se rapproche de la configuration totale du relief, à l'effet de lissage dû au principe d'extraction du terrain près (balayage autour de l'aéronef A avec de moins en moins de discontinuités).

Lorsque l'aéronef A se déplace, le terrain 5 est extrait à l'aide des moyens 3, au fur et à mesure de ce déplacement, le long du corridor 17 de chaque trajectoire d'évitement Ti prédéfinie. L'unité centrale 13 dispose donc d'un profil de terrain pour chaque trajectoire d'évitement Ti.

On notera que le moyen 3 destiné à déterminer et à fournir les profils individuels du terrain, pour chaque trajectoire d'évitement Ti, comporte un moyen usuel connaissant le profil général de tout le terrain 5 (dont on a mis en évidence des hauteurs différentes, à l'aide de zones 5A, 5B et 5C, sur les figures 2 et 5). Ce moyen usuel peut être une base de données numériques, embarquée et contenant ce profil général, ou un dispositif, tel qu'un radar en mode cartographie par exemple, qui élabore ledit profil à bord de l'aéronef A.

Lors de l'apparition inattendue d'une menace air-sol, il est intéressant que la distance (ou la profondeur) D permette une modification de route (ou de cap) d'au moins 90° de chaque côté. Or, un écran de visualisation 9 de type tête haute présente une ouverture angulaire qui est inférieure à cette valeur (généralement 20° contre les 180° requis). Toutefois, il n'est pas indispensable de rendre l'affichage des différentes trajectoires d'évitement Ti conforme dans le plan latéral. Ce qui est important, c'est que le pilote sache quelle route prendre en fonction de la configuration de terrain la plus appropriée. Ensuite, le pilote va de toute façon faire voler l'aéronef A dans la direction adéquate, ce qui rend la conformité latérale non obligatoire, l'important se trouvant alors le long de la route suivie.

Aussi, de préférence, la conformité latérale de la figuration de la pente maximale estimée se dégrade en s'éloignant latéralement du vecteur vitesse sol, mais elle est parfaite pour la partie représentant la pente sur la trajectoire à virage ϕ nul (ϕ3 pour l'exemple de la figure 2). Cet affichage tourne de toute manière en même temps que l'aéronef A, quand celui-ci tourne vers la trajectoire choisie.

De plus, en tant qu'aide au pilotage, l'affichage conforme à l'invention est plutôt utilisé en conditions de mauvaise visibilité, ce qui rend moins nécessaire la superposition sur le terrain de certaines informations tête haute affichées (premières pentes limites).

La conformité verticale, pour toutes les trajectoires latérales envisagées, est obligatoire car l'affichage concerne des pentes sol. Aussi, les pentes totales et les trajectoires sont données par rapport au sol, et un facteur de charge additionnel permet de prendre en compte l'impact dû aux virages.

La figure 2 donne un aperçu de l'affichage (conforme à l'invention) visualisable sur l'écran 9 de type tête haute (en fonction des différentes trajectoires envisageables n=5). Les signes caractéristiques Si et Ci illustrant les informations de pentes nécessaires à voler (pour éviter le relief) et de pentes volables par l'aéronef (altérées par un virage pour celles qui ne sont pas alignées sur le vecteur vitesse) peuvent respectivement être désignés par les termes de réticule plancher (signe caractéristique Si) et de réticule plafond (signe caractéristique Ci).

Ces réticules plafond et plancher (ou signes caractéristiques) Ci et Si sont positionnés comme suit :
- l'origine du système de référence de ces réticules est la route de l'aéronef (ϕ3 = 0) ;
- verticalement, la hauteur de chaque réticule est positionnée à Gν.γ mrd (y étant la pente correspondante) par rapport à l'origine de l'écran de visualisation 9 (horizon inertiel 16). Si la pente calculée est négative, le réticule est positionné sous l'horizon inertiel 16 ; et
- latéralement, le milieu d'un réticule est positionné à GL.ϕ mrd par rapport à la route de l'aéronef (ϕ3).

Les gains Gν, GL et la largeur de chaque réticule Ci, Si sont déterminés de manière à obtenir un pilotage aisé du vecteur vitesse. De préférence, le gain Gν est égal à 1 pour obtenir un affichage vertical strictement conforme, c'est-à-dire qui respecte les angles vis-à-vis de la réalité.

Par conséquent, le pilote doit maintenir le vecteur vitesse sol (symbole 11) entre les réticules plafond et plancher Ci et Si pour pouvoir virer à un facteur de charge donné au-dessus du terrain 5, tout en restant dans les limites des performances réelles de l'aéronef A. La condition pour cela est évidemment que le réticule plafond Ci soit au-dessus du réticule plancher Si (ce qui est le cas pour les virages ϕ1 à ϕ4 sur les figures 2 et 3). Dans le cas contraire (C5 au-dessous de S5 sur les figures 2 et 3), la pente nécessaire pour passer le terrain 5 est trop élevée par rapport aux performances de l'aéronef A.

On notera que si une falaise est présente sur un côté, on peut prévoir un gain Gv sur les pentes affichées tel que les réticules planchers Si sortent de l'écran de visualisation 9 par le haut, ce qui dissuade le pilote de placer le symbole 11 du vecteur vitesse de l'aéronef A au-dessus de ces réticules planchers Si.

Le nombre de trajectoires latérales Ti en virage, ainsi que la profondeur D de ces trajectoires Ti dépendent fortement des capacités de calcul du système 1, ainsi que des performances de tracé de l'écran de visualisation 9. Le traitement requérant le plus de ressources de calcul est l'extraction des données du terrain 5 (mise en oeuvre par les moyens 3). Il importe donc de minimiser les extractions du terrain 5.

Par ailleurs, on notera que quand n est très grand, nécessairement la largeur de chaque réticule ou signe caractéristique Ci, Si est très petite. Dans ce cas, les profils de pente affichés tendent vers un profil de terrain filtré autour de l'aéronef A (comme représenté sur l'illustration 9B de la figure 4, comparée à l'illustration 9A où n=5). Les courbes 19A et 20A munies de réticules Si et Ci sont alors remplacées par des courbes 19B et 20B qui sont lissées.

Par conséquent, grâce à l'invention, lorsque l'aéronef A suit un plan de vol initial à basse altitude, le système 1 calcule en permanence une ou plusieurs trajectoires d'évitement Ti qui correspondent à un ou plusieurs virages ϕi, généralement en nombre égal de part et d'autre de la route courante de l'aéronef A. Le système 1 permet d'anticiper la configuration du terrain 5 le long de ces trajectoires d'évitement Ti et d'indiquer si les performances réelles atteignables par l'aéronef A permettent de franchir le relief. Pour des raisons de performances (limitation du temps de calcul, et donc minimisation du délai de disponibilité de chaque trajectoire), lesdites trajectoires d'évitement Ti sont toutes calculées sur une longueur (ou profondeur) D donnée. Le système 1 calcule ensuite les énergies (pentes totales) pour cet ensemble de trajectoires latérales Ti (qui permettent des manoeuvres d'évitement) et présente un état suffisamment explicite sur l'écran de visualisation 9 de type tête haute, afin de fournir au pilote, instantanément (ou avec un délai très court), une indication de la meilleure route à prendre en vol à basse altitude pour se protéger d'une menace détectée.

Dans une application particulière relative à un routage, on peut utiliser les profils continus successifs pour calculer un profil de vol à basse altitude sur une certaine profondeur devant l'aéronef A, en allant chercher de part et d'autre de la route de l'aéronef A les creux (vallées) du terrain 5.

En général, un aéronef part d'un point B1 pour aller vers un point B2. En vol à altitude constante, la ligne droite est évidemment la trajectoire la plus directe qui minimise le temps de trajet et la consommation de carburant. En vol à basse altitude, le pilote peut aller du point B1 vers le point B2 en évitant d'avoir à voler au-dessus des crêtes, donc en suivant les vallées, ce qui ne représente pas forcément le chemin le plus court, mais celui qui lui permet de bénéficier du masquage de terrain le plus efficace possible.

Le choix de suivre telle ou telle vallée, donc le choix de la progression longitudinale de l'aéronef A, s'effectue automatiquement grâce à un système expert qui évalue les combinaisons de trajectoires possibles sur une certaine profondeur de trajectoire devant l'aéronef A.

Un système de notation permet de déterminer automatiquement une direction plutôt qu'une autre. Une note prise en compte par ce système de notation peut dépendre de l'éloignement par rapport à la trajectoire directe, de la consommation de carburant supplémentaire et de l'efficacité de la trajectoire en termes de masquage du terrain (efficacité calculée à partir d'une base numérique de données du terrain, en calculant par exemple le nombre de points du terrain environnant qui voient la trajectoire en portée optique).

L'avantage de cette solution est que la trajectoire est alors optimisée dans les deux dimensions. Le système expert et le système de notation qui ne sont pas représentés font partie dudit système 1 conforme à l'invention.

Dans l'exemple de la figure 5, on voit que l'aéronef A peut aller voler dans un creux à droite sans trop s'écarter de la route actuelle. Le système expert vérifie sur une certaine profondeur devant l'aéronef A que cette solution est réellement meilleure à court terme que celle de gauche.

On a illustré sur la figure 5 les différentes trajectoires d'évitement Ti à différents temps t1, t2, t3 et t4 successifs (ou itérations). La trajectoire résultante correspond à la trajectoire centrale 21 en trait fort.

Cette application particulière qui met à profit une partie du procédé de base précité, permet uniquement de proposer automatiquement une trajectoire latérale optimale (routage), en fonction du terrain pour joindre un point B1 à un point B2. Une fois que le pilote choisit de suivre cette nouvelle trajectoire qui est alors la trajectoire de référence, il a toujours à disposition le procédé de base mis en oeuvre par le système 1 (à savoir les réticules plafonds et/ou planchers) au cas où il aurait besoin d'effectuer une manoeuvre d'évitement, par exemple à cause de l'apparition soudaine et inattendue d'une menace air-sol.

Par ailleurs, dans un second mode de réalisation préféré représenté sur les figures 6 à 11, lesdits moyens 6 sont formés pour déterminer une première pente limite θmin qui correspond à une pente à piquer maximale de l'aéronef A à laquelle il peut descendre avant d'appliquer une remontée à plein manche arrière avec une puissance maximale de manière à pouvoir survoler ledit terrain 5 devant lui.

Une telle manoeuvre avec remontée à plein manche arrière de type FBS ("Full Back Stick" en anglais) avec une puissance maximale de type TOGA ("Take-Off/Go-Around" en anglais, c'est-à-dire poussée maximale de décollage ou de remise des gaz) correspond à la manoeuvre où le pilote tire le manche de commande à fond vers l'arrière et applique à l'aéronef A la puissance maximale. On sait qu'une telle manoeuvre ne permet pas de monter à la pente maximale que peut atteindre l'aéronef A, mais pour le pilote une telle manoeuvre représente la manoeuvre d'urgence qui est la plus simple et la plus intuitive à effectuer.

Dans ce second mode de réalisation, les moyens d'affichage 8 présentent donc sur l'écran de visualisation 9 un signe caractéristique SC qui représente ladite pente limite θmin, comme représenté sur la figure 6.

Selon l'invention, les moyens 6 utilisent un élément de test 25 qui permet de tester les capacités de franchissement de l'aéronef A avec la manoeuvre précitée et qui est constitué, comme représenté sur les figures 6 et 7 :
- d'un segment rectiligne 25A illustré par un vecteur V1 qui présente un angle θmin par rapport au vecteur vitesse courant V2 de l'aéronef A, et dont la longueur est représentative d'une durée de vol prédéterminée ;
- une partie de ressource verticale 25B ; et
- un segment 25C de montée à plein manche arrière avec une puissance maximale.

La longueur totale de l'élément de test 25 doit permettre d'anticiper des problèmes avec un préavis suffisant (de l'ordre de quelques milles nautiques pour un avion de transport tactique de type A400M). L'élément de test 25 fournit donc la capacité maximale d'évitement pour le vecteur vitesse instantané si l'aéronef A descendait à θmin degrés sous le vecteur vitesse V2 courant. On a également représenté sur les figures 6 et 7 un élément de test 26 comportant des parties 26A, 26B et 26C similaires auxdites parties 25A, 25B et 25C, mais dont la partie 26A illustre ledit vecteur vitesse V2 courant. Cet élément de test 26 fournit donc la capacité maximale d'évitement pour le vecteur vitesse instantané. Bien entendu, cet élément de test 26 ne doit pas passer au travers du profil du terrain 5 (au pire, il peut venir au contact de ce dernier).

Le signe caractéristique SC ainsi déterminé est saturé vers le bas, lorsque l'élément de test 25 n'intercepte aucun élément du terrain 5. Dans ce cas, l'angle θmin présente une valeur prédéterminée, par exemple -14° pour un avion de transport militaire de type A400M.

En revanche, lorsque l'élément de test 25 intercepte le terrain 5, comme représenté sur la figure 7, ledit élément de test 25 est adapté audit profil du terrain 5. On obtient ainsi un angle θterr entre le signe caractéristique SC et le symbole 11 (illustrant le vecteur vitesse sol de l'aéronef A), qui est inférieur à la pente minimale θmin précitée. Dans une telle situation, au fur et à mesure que le signe caractéristique SC s'approche du symbole 11 et que la marge diminue, le pilote doit tirer sur le manche de commande, afin de toujours maintenir le signe caractéristique SC au-dessous dudit symbole 11 de façon à pouvoir passer l'obstacle devant lui. Une telle manoeuvre est possible jusqu'au moment où le signe caractéristique SC arrive au niveau du symbole 11. Lorsqu'une telle situation limite est atteinte, le dispositif 1 émet un signal d'alerte, par exemple par l'intermédiaire de l'affichage d'un moyen d'indication 27 particulier sur l'écran de visualisation 9. Ce moyen d'indication 27 peut correspondre à une croix de dégagement comme représenté sur la figure 8. Il peut également s'agir d'un message d'alerte, d'un réticule clignotant ou d'une flèche de dégagement par exemple. Dans une telle situation extrême, l'aéronef A est toujours en mesure de franchir le relief, si le pilote applique une remontée à plein manche arrière avec une puissance maximale, telle que précitée.

En revanche, si dans une telle situation extrême, le pilote ne tire pas sur le manche de commande, le signe caractéristique SC va passer au-dessus du symbole 11, ce qui signifie que l'aéronef A ne pourra plus franchir le relief devant lui, au moins avec la marge espérée. Le pilote doit alors modifier la trajectoire latérale pour pouvoir survoler le relief.

On notera que, pendant une manoeuvre d'évitement de type FBS/TOGA, la marge en descente commence à croître au fur et à mesure que l'obstacle est survolé. Dans une telle situation, il est conseillé de maintenir la manoeuvre FBS/TOGA pendant un temps minimal afin d'éviter un pilotage par à-coups qui induirait une succession d'alertes à chaque fois que le pilote rend la main.

Dans un mode de réalisation particulier :
- lesdits moyens 6 déterminent, de plus, une pente de montée qui correspond à la pente de montée la plus importante susceptible d'être volée par l'aéronef A, soit avec tous les moteurs en fonctionnement, soit avec un moteur en panne ; et
- lesdits moyens d'affichage 8 présentent sur l'écran de visualisation 9, comme représenté sur la figure 9, un signe auxiliaire 28 qui représente sur l'échelle de pente de l'écran de visualisation 9 cette pente de montée la plus importante.

Ce mode de réalisation particulier permet au pilote de bien voir les marges de montée restantes, par exemple en comparant le signe caractéristique SC et ledit signe auxiliaire 28.

On s'intéresse à présent au cas où l'aéronef A vole en virage.

Dans ce cas, le pilote doit être conscient de ce qui arriverait s'il continuait sur la trajectoire courante, ou dans le cas d'une impossibilité à poursuivre sur cette trajectoire courante, ce qui adviendrait sur une trajectoire de remise des ailes à plat avant une ressource verticale à poussée maximale.

La protection par rapport au terrain est alors assurée sur une trajectoire extrapolée à partir du roulis courant de l'aéronef A (éventuellement filtré), ainsi que sur une trajectoire extrapolée avec l'hypothèse d'une remise des ailes à plat avant la manoeuvre FBS/TOGA. Cette deuxième trajectoire n'est pas normale à la trajectoire courante de l'aéronef A, et elle présente une déviation par rapport à cette normale en raison du temps nécessaire pour remettre les ailes à plat. Dans ce cas :
- l'unité centrale 13 détermine, de plus, une pente limite auxiliaire qui correspond à une pente à piquer maximale de l'aéronef A, à laquelle il peut descendre avant de réaliser une remise des ailes à plat, puis d'appliquer une remontée à plein manche arrière de type FBS avec une puissance maximale de type TOGA de manière à pouvoir survoler ledit terrain 5. La trajectoire verticale est calculée de la même manière pour un cas en virage et pour un cas de remise des ailes à plat ; et
- les moyens d'affichage 8 présentent sur l'écran de visualisation 9 un signe auxiliaire 29 représentant cette pente limite auxiliaire, comme représenté sur la figure 10.

Au lieu de présenter ledit signe auxiliaire 29 relatif à une trajectoire de remise à plat des ailes, il peut être suffisant d'émettre un signal d'alerte (par exemple sous forme d'un message qui est, par exemple, inscrit dans un rectangle 30 représenté en traits interrompus sur la figure 10) lorsque la remise des ailes à plat est impossible, si le signe auxiliaire 29 venait à passer au-dessus du symbole 11. Ce dernier mode de réalisation permet de simplifier l'affichage de l'écran de visualisation 9.

Lors d'un vol à basse altitude en pilotage manuel, l'aéronef A se faufile dans les vallées afin de profiter du masquage du terrain, par exemple vis-à-vis de menaces sol-air éventuelles. Aussi, lorsque le pilote fait tourner l'aéronef A parce qu'il est face à un relief, la manoeuvre d'évitement avec une remise des ailes à plat est souvent impossible. Dans ce cas, si une alarme est émise concernant la trajectoire courante de l'aéronef A :
- ou le pilote fait monter l'aéronef A, et dans ce cas le masquage du terrain peut ne plus être efficace ;
- ou s'il veut rester au plus près du sol, il modifie le virage suivant les possibilités de la configuration du terrain, c'est-à-dire ;
   ■ soit il augmente le roulis de l'aéronef A, c'est-à-dire il serre le virage ;
   ■ soit, si le roulis est déjà important, il élargit le virage.

Toutefois, le fait de changer de trajectoire remet en cause la présence ou l'absence d'une alerte, et le pilote peut alors se retrouver aussi bien dans une situation meilleure que dans une situation pire qu'initialement.

Aussi, pour remédier à cet inconvénient, on augmente le nombre de trajectoires sur lesquelles la protection sol est calculée et vérifiée, comme représenté sur la figure 11 à titre d'exemple.

La situation de la figure 11 est similaire à celle de la figure 2, mais elle est relative audit second mode de réalisation. Dans ce cas, un signe caractéristique SC est calculé pour chacune des trajectoires T1 à T5, sachant que le signe caractéristique SC situé sous le symbole 11 est celui qui est calculé pour la trajectoire courante, en l'occurrence la trajectoire T4. Ces signes caractéristiques SC se déplacent donc latéralement sur l'écran de visualisation 9 en fonction du roulis appliqué à l'aéronef A. Il suffit donc d'extraire le terrain le long de chaque trajectoire sur un corridor 17 qui dépend notamment de la qualité de navigation de l'aéronef A.

On notera qu'en ligne droite ou en virage, les signes caractéristiques SC situés de part et d'autre du signe caractéristique SC lié au symbole 11 fournissent des informations sur le terrain autour de l'aéronef A. La consigne de roulis est donc connue d'avance par le pilote. S'il veut changer de trajectoire en serrant ou en desserrant son virage à partir de la trajectoire courante T4, le symbole 11 vient, suite à l'action du roulis du pilote, se positionner relativement au signe caractéristique SC qui correspond au roulis commandé.

Dans le cadre de la présente invention, lorsqu'une alerte est émise relativement à la trajectoire courante, le pilote a donc le choix :
- de monter le long de la trajectoire latérale courante ; ou
- de mettre les ailes à plat et de monter ; ou
- de rester le plus bas possible en serrant ou élargissant son virage.

Cette dernière possibilité induit une modification de la trajectoire courante en virage. L'alerte peut disparaître en fonction de la configuration du terrain ou bien s'aggraver. Aussi, un affichage horizontal du terrain, par exemple sur un écran de navigation, peut aider le pilote à choisir une nouvelle trajectoire latérale, mais cette méthode requiert une bonne anticipation du terrain, ce qui n'est pas forcément aisé car un tel affichage est nécessairement de type tête basse. De plus, cet affichage ne donne aucune indication sur la capacité en terme de performances de l'aéronef A à franchir le relief. Aussi, dans une telle situation, le mode de réalisation représenté sur la figure 11 comportant une pluralité de trajectoires permet au pilote un pilotage aisé, car des informations pertinentes sont déjà présentes sur l'écran de visualisation 9 tête haute.

Par ailleurs, si le pilote décide de suivre la trajectoire pour laquelle une alerte a été émise, il ne peut pas se contenter de maintenir le roulis initial pendant la montée, car le rayon de virage varierait à roulis constant pendant cette montée. Dans une telle situation, on présente de plus sur l'écran de visualisation 9 une indication de roulis 31, comme représenté sur la figure 10, qui indique au pilote le roulis à commander pour maintenir une trajectoire donnée.

## Revendications

1. Procédé d'aide au pilotage d'un aéronef (A) volant à basse altitude,
**caractérisé en ce que** l'on réalise, de façon automatique et répétitive, les opérations suivantes :
a) on détermine au moins une trajectoire d'évitement (T1 à T5), au moins sur une distance prédéterminée (D) à l'avant de l'aéronef (A), ladite trajectoire d'évitement (T1 à T5) correspondant à une trajectoire latérale à basse altitude et présentant au moins un virage latéral (ϕ1 à ϕ5) ;
b) on détermine le profil du terrain (5) situé sous cette trajectoire d'évitement (T1 à T5) ;
c) on détermine, en fonction dudit profil du terrain (5), au moins une première pente limite correspondant à une pente que l'aéronef (A) doit voler pour pouvoir survoler ledit terrain (5) sur toute ladite distance prédéterminée (D) le long de ladite trajectoire d'évitement (T1 à T5) ; et
d) on présente au pilote, sur un écran de visualisation (9), au moins un premier signe caractéristique (S1 à S5, SC) qui représente ladite première pente limite et qui est associé à une échelle de pente (10), à laquelle est également associé un symbole (11) illustrant le vecteur vitesse sol de l'aéronef (A).

2. Procédé selon la revendication 1,
**caractérisé en ce que** ladite première pente limite correspond à une pente minimale que l'aéronef (A) doit voler pour pouvoir survoler ledit terrain (5) sur toute ladite distance prédéterminée (D) le long de ladite trajectoire d'évitement (T1 à T5), indépendamment des performances dudit aéronef (A).

3. Procédé selon la revendication 2,
**caractérisé en ce que :**
- à l'étape c), on détermine, de plus, au moins une seconde pente limite correspondant à une pente maximale volable par l'aéronef (A), en fonction de conditions de vol prédéterminées et de performances effectives dudit aéronef (A) ; et
- à l'étape d), on présente sur l'écran de visualisation au moins un second signe caractéristique (C1 à C5) qui représente ladite seconde pente limite et qui est également associé à ladite échelle de pente (10).

4. Procédé selon la revendication 3,
**caractérisé en ce que** lesdites conditions de vol prédéterminées sont relatives à un fonctionnement normal de tous les moteurs de l'aéronef (A).

5. Procédé selon la revendication 3,
**caractérisé en ce que** lesdites conditions de vol prédéterminées sont relatives à une panne anticipée d'un moteur de l'aéronef (A).

6. Procédé selon l'une des revendications 2 à 5,
**caractérisé en ce que :**
- à l'étape a), on détermine une pluralité de trajectoires d'évitement (T1 à T5) présentant chacune un virage différent (ϕ1 à ϕ5) ;
- à l'étape b), on détermine les profils du terrain (5) sous ces trajectoires d'évitement (T1 à T5) ;
- à l'étape c), on détermine une pluralité de premières pentes limites associées respectivement à ladite pluralité de trajectoires d'évitement (T1 à T5) ; et
- à l'étape d), on présente sur l'écran de visualisation (9) une pluralité de premiers signes caractéristiques (S1 à S5) représentant respectivement ladite pluralité de premières pentes limites, ladite échelle de pente (10) étant présentée verticalement et lesdits premiers signes caractéristiques (S1 à S5) étant présentés horizontalement l'un à côté de l'autre en fonction du sens et de la valeur du virage (ϕ1 à ϕ5) correspondant.

7. Procédé selon la revendication 6,
**caractérisé en ce que,** de plus :
- à l'étape c), on détermine une pluralité de secondes pentes limites associées respectivement à ladite pluralité de trajectoires d'évitement (T1 à T5) ; et
- à l'étape d), on présente sur l'écran de visualisation (9) une pluralité de seconds signes caractéristiques (C1 à C5) représentant respectivement ladite pluralité de secondes pentes limites, lesdits seconds signes caractéristiques (C1 à C5) étant présentés horizontalement l'un à côté de l'autre en fonction du sens et de la valeur du virage (ϕ1 à ϕ5) correspondant de sorte que des premier et second signes caractéristiques qui sont associés à une même trajectoire d'évitement sont situés horizontalement au même niveau.

8. Procédé selon l'une des revendications 6 et 7,
**caractérisé en ce que** l'on détermine un même nombre de trajectoires d'évitement présentant un virage vers la droite que de trajectoires d'évitement présentant un virage vers la gauche.

9. Procédé selon l'une quelconque des revendications 6 à 8,
**caractérisé en ce que** l'on prend en compte un nombre de trajectoires d'évitement permettant d'obtenir au moins une première courbe continue (20B) reliant ensemble lesdits premiers signes caractéristiques.

10. Procédé selon la revendication 7,
**caractérisé en ce que** l'on prend en compte un nombre de trajectoires d'évitement permettant d'obtenir au moins une seconde courbe continue (19B) reliant ensemble lesdits seconds signes caractéristiques.

11. Procédé selon l'une quelconque des revendications 6 à 10,
**caractérisé en ce que :**
- on détermine, pour chaque trajectoire d'évitement (T1 à T5), une note qui est relative à au moins un critère prédéterminé ;
- on compare entre elles les notes ainsi déterminées ; et
- en fonction de cette comparaison, on sélectionné l'une desdites trajectoires d'évitement que l'on met en évidence.

12. Procédé selon la revendication 1,
**caractérisé en ce que** ladite première pente limite correspond à une pente à piquer maximale de l'aéronef (A), à laquelle il peut descendre avant d'appliquer une remontée à plein manche arrière avec une puissance maximale de manière à pouvoir survoler ledit terrain (5).

13. Procédé selon la revendication 12,
**caractérisé en ce que** le premier signe caractéristique (SC) représentant ladite première pente limite est adapté au profil du terrain (5).

14. Procédé selon l'une des revendications 12 et 13,
**caractérisé en ce que,** lorsque ledit premier signe caractéristique (SC) atteint le symbole (11) illustrant le vecteur vitesse sol, on émet un signal d'alerte.

15. Procédé selon l'une quelconque des revendications 12 à 14,
**caractérisé en ce que :**
- à l'étape c), on détermine, de plus, la pente de montée la plus importante susceptible d'être volée par l'aéronef (A) ; et
- à l'étape d), on présente sur l'écran de visualisation (9) un signe auxiliaire (28) représentant cette pente de montée la plus importante.

16. Procédé selon l'une quelconque des revendications 12 à 15,
**caractérisé en ce que,** lorsque l'aéronef (A) est en virage :
- à l'étape c), on détermine, de plus, une pente limite auxiliaire qui correspond à une pente à piquer maximale de l'aéronef (A), à laquelle il peut descendre avant de réaliser une remise des ailes à plat puis d'appliquer une remontée à plein manche arrière avec une puissance maximale de manière à pouvoir survoler ledit terrain (5) ; et
- à l'étape d), on présente sur l'écran de visualisation (9) un signe auxiliaire (29) représentant cette pente limite auxiliaire.

17. Procédé selon l'une quelconque des revendications 12 à 16,
**caractérisé en ce que,** lorsque l'aéronef (A) est en virage et qu'une remise des ailes à plat de l'aéronef (A) est impossible, on émet un signal d'alerte correspondant.

18. Procédé selon l'une quelconque des revendications 12 à 17,
**caractérisé en ce que,** lorsque l'aéronef (A) est en virage, on présente sur l'écran de visualisation (9) une indication de roulis (31) qui indique au pilote le roulis à commander pour maintenir une trajectoire donnée.

19. Procédé selon l'une quelconque des revendications 12 à 18,
**caractérisé en ce que :**
- à l'étape a), on détermine une pluralité de trajectoires d'évitement (T1 à T5) présentant chacune un virage différent ;
- à l'étape b), on détermine les profils du terrain (5) sous ces trajectoires d'évitement (T1 à T5) ;
- à l'étape c), on détermine une pluralité de premières pentes limites associées respectivement à ladite pluralité de trajectoires d'évitement (T1 à T5) ; et
- à l'étape d), on présente sur l'écran de visualisation (9) une pluralité de premiers signes caractéristiques (SC) représentant respectivement ladite pluralité de premières pentes limites, ladite échelle de pente étant présentée verticalement et lesdits premiers signes caractéristiques (SC) étant présentés horizontalement l'un à côté de l'autre en fonction du sens et de la valeur du virage correspondant.

20. Procédé selon l'une quelconque des revendications précédentes,
**caractérisé en ce que** ledit écran de visualisation (9) est un écran d'un dispositif de visualisation tête haute.

21. Procédé selon l'une quelconque des revendications précédentes,
**caractérisé en ce que** l'on est en mesure de supprimer la présentation des premiers signes caractéristiques présentés à l'étape d).

22. Système d'aide au pilotage d'un aéronef volant à basse altitude,
**caractérisé en ce qu'**il comporte :
- des premiers moyens (2) pour déterminer au moins une trajectoire d'évitement (T1 à T5), au moins sur une distance prédéterminée (D) à l'avant de l'aéronef (A), ladite trajectoire d'évitement (T1 à T5) correspondant à une trajectoire latérale à basse altitude et présentant au moins un virage latéral (ϕ1 à ϕ5) ;
- des deuxièmes moyens (3) pour déterminer le profil du terrain (5) situé sous cette trajectoire d'évitement (T1 à T5) ;
- des troisièmes moyens (6) pour déterminer, en fonction dudit profil du terrain (5), au moins une première pente limite correspondant à une pente que l'aéronef (A) doit voler pour pouvoir survoler ledit terrain (5) sur toute ladite distance prédéterminée (D) le long de ladite trajectoire d'évitement (T1 à T5) ; et
- des moyens d'affichage (8) pour présenter, sur un écran de visualisation (9), au moins un premier signe caractéristique (S1 à S5) qui représente ladite première pente limite et qui est associé à une échelle de pente (10), à laquelle est également associé un symbole (11) illustrant le vecteur vitesse sol de l'aéronef (A).

23. Système selon la revendication 22,
**caractérisé en ce que** lesdits troisièmes moyens (6) sont formés pour déterminer une première pente limite qui correspond à une pente minimale que l'aéronef (A) doit voler pour pouvoir survoler ledit terrain (5) sur toute ladite distance prédéterminée (D) le long de ladite trajectoire d'évitement (T1 à T5), indépendamment des performances dudit aéronef (A).

24. Système selon la revendication 23,
**caractérisé en ce que :**
- ledit système (1) comporte, de plus, des quatrièmes moyens (12) pour déterminer au moins une seconde pente limite correspondant à une pente maximale volable par l'aéronef (A), en fonction de conditions de vol prédéterminées et de performances effectives dudit aéronef (A) ; et
- lesdits moyens d'affichage (8) présentent, sur l'écran de visualisation (9), au moins un second signe caractéristique (C1 à C5) qui représente ladite seconde pente limite et qui est également associé à ladite échelle de pente (10).

25. Système selon l'une quelconque des revendications 23 et 24,
**caractérisé en ce que :**
- lesdits premiers moyens (2) déterminent une pluralité de trajectoires d'évitement (T1 à T5) présentant chacune un virage différent (ϕ1 à ϕ5) ;
- lesdits deuxièmes moyens déterminent les profils du terrain (5) sous ces trajectoires d'évitement (T1 à T5) ;
- lesdits troisièmes moyens (6) déterminent une pluralité de premières pentes limites associées respectivement à ladite pluralité de trajectoires d'évitement (T1 à T5) ; et
- lesdits moyens d'affichage (8) présentent, sur l'écran de visualisation (9), une pluralité de premiers signes caractéristiques (S1 à S5) représentant respectivement ladite pluralité de premières pentes limites, ladite échelle de pente (10) étant présentée verticalement et lesdits premiers signes caractéristiques (S1 à S5) étant présentés horizontalement l'un à côté de l'autre en fonction du sens et de la valeur du virage (ϕ1 à ϕ5) correspondant.

26. Système selon les revendications 24 et 25,
**caractérisé en ce que :**
- lesdits quatrièmes moyens (12) déterminent une pluralité de secondes pentes limites associées respectivement à ladite pluralité de trajectoires d'évitement (T1 à T5) ; et
- lesdits moyens d'affichage (8) présentent, sur l'écran de visualisation (9), une pluralité de seconds signes caractéristiques (C1 à C5) représentant respectivement ladite pluralité de secondes pentes limites, lesdits seconds signes caractéristiques (C1 à C5) étant présentés horizontalement l'un à côté de l'autre en fonction du sens et de la valeur du virage (ϕ1 à ϕ5) correspondant de sorte que des premier et second signes caractéristiques qui sont associés à une même trajectoire d'évitement sont situés horizontalement au même niveau.

27. Système selon la revendication 22,
**caractérisé en ce que** lesdits troisièmes moyens (6) sont formés pour déterminer une première pente limite qui correspond à une pente à piquer maximale de l'aéronef (A) à laquelle il peut descendre avant d'appliquer une remontée à plein manche arrière avec une puissance maximale de manière à pouvoir survoler ledit terrain (5).

28. Système selon l'une quelconque des revendications 22 à 27,
**caractérisé en ce que** lesdits moyens d'affichage (8) comprennent un dispositif de visualisation tête haute qui comporte ledit écran de visualisation (9).

29. Système selon l'une quelconque des revendications 22 à 28,
**caractérisé en ce qu'**il comporte, de plus, des moyens de commande (22) permettant d'engendrer et de supprimer la présentation des premiers signes caractéristiques (S1 à S5) sur ledit écran de visualisation (9).

30. Aéronef,
**caractérisé en ce qu'**il comporte un système (1) susceptible de mettre en oeuvre le procédé spécifié sous l'une quelconque des revendications 1 à 21.

31. Aéronef,
**caractérisé en ce qu'**il comporte un système (1) tel que celui spécifié sous l'une quelconque des revendications 22 à 29.

## Claims

1. A method of aiding the piloting of an aircraft (A) flying at low altitude,
**characterized in that** the following operations are carried out in an automatic and repetitive manner:
a) at least one avoidance trajectory (T1 to T5) is determined, at least over a predetermined distance (D) ahead of the aircraft (A), said avoidance trajectory (T1 to T5) corresponding to a low-altitude lateral trajectory and exhibiting at least one lateral turn (ϕ1 to ϕ5) ;
b) the profile of the terrain (5) situated under this avoidance trajectory (T1 to T5) is determined;
c) at least one first limit slope corresponding to a slope that the aircraft (A) must fly so as to be able to overfly said terrain (5) over the whole of said predetermined distance (D) along said avoidance trajectory (T1 to T5) is determined depending on said profile of the terrain (5); and
d) the pilot is presented, on a viewing screen (9), with at least one first characteristic sign (S1 to S5, SC) which represents said first limit slope and which is associated with a slope scale (10), with which is also associated a symbol (11) illustrating the ground speed vector of the aircraft (A).

2. The method as claimed in claim 1,
**characterized in that** said first limit slope corresponds to a minimum slope that the aircraft (A) must fly so as to be able to overfly said terrain (5) over the whole of said predetermined distance (D) along said avoidance trajectory (T1 to T5), independently of the performance of said aircraft (A).

3. The method as claimed in claim 2,
**characterized in that:**
- in step c), at least one second limit slope corresponding to a maximum slope at which the aircraft (A) can fly is moreover determined depending on predetermined flight conditions and actual performance of said aircraft (A); and
- in step d), at least one second characteristic sign (C1 to C5) which represents said second limit slope and which is also associated with said slope scale (10) is presented on the viewing screen.

4. The method as claimed in claim 3,
**characterized in that** said predetermined flight conditions relate to normal operation of all the engines of the aircraft (A).

5. The method as claimed in claim 3,
**characterized in that** said predetermined flight conditions relate to an anticipated failure of an engine of the aircraft (A).

6. The method as claimed in one of claims 2 to 5,
**characterized in that:**
- in step a), a plurality of avoidance trajectories (T1 to T5) each exhibiting a different turn (ϕ1 to ϕ5) is determined;
- in step b), the profiles of the terrain (5) under these avoidance trajectories (T1 to T5) are determined;
- in step c), a plurality of first limit slopes associated respectively with said plurality of avoidance trajectories (T1 to T5) is determined; and
- in step d), a plurality of first characteristic signs (S1 to S5) representing respectively said plurality of first limit slopes is presented on the viewing screen (9), said slope scale (10) being presented vertically and said first characteristic signs (S1 to S5) being presented horizontally one alongside the other depending on the direction and the value of the corresponding turn (ϕ1 to ϕ5).

7. The method as claimed in claim 6,
**characterized in that,** moreover:
- in step c), a plurality of second limit slopes associated respectively with said plurality of avoidance trajectories (T1 to T5) is determined; and
- in step d), a plurality of second characteristic signs (C1 to C5) representing respectively said plurality of second limit slopes is presented on the viewing screen (9), said second characteristic signs (C1 to C5) being presented horizontally one alongside the other depending on the direction and the value of the corresponding turn (ϕ1 to ϕ5) so that first and second characteristic signs which are associated with one and the same avoidance trajectory are situated horizontally at the same level.

8. The method as claimed in one of claims 6 and 7,
**characterized in that** the same number of avoidance trajectories exhibiting a turn to the right as avoidance trajectories exhibiting a turn to the left is determined.

9. The method as claimed in any one of claims 6 to 8,
**characterized in that** account is taken of a number of avoidance trajectories making it possible to obtain at least one first continuous curve (20B) connecting together said first characteristic signs.

10. The method as claimed in claim 7,
**characterized in that** account is taken of a number of avoidance trajectories making it possible to obtain at least one second continuous curve (19B) connecting together said second characteristic signs.

11. The method as claimed in any one of claims 6 to 10,
**characterized in that:**
- a score which relates to at least one predetermined criterion is determined for each avoidance trajectory (T1 to T5);
- the scores thus determined are compared with one another; and
- depending on this comparison, one of said avoidance trajectories is selected and highlighted.

12. The method as claimed in claim 1,
**characterized in that** said first limit slope corresponds to a maximum dive slope of the aircraft (A), at which it can descend before applying a full back stick climb with maximum power so as to be able to overfly said terrain (5).

13. The method as claimed in claim 12,
**characterized in that** the first characteristic sign (SC) representing said first limit slope is suited to the profile of the terrain (5).

14. The method as claimed in one of claims 12 and 13,
**characterized in that,** when said first characteristic sign (SC) reaches the symbol (11) illustrating the ground speed vector, an alert signal is emitted.

15. The method as claimed in any one of claims 12 to 14,
**characterized in that:**
- in step c), the largest climb slope capable of being flown by the aircraft (A) is moreover determined; and
- in step d), an auxiliary sign (28) representing this largest climb slope is presented on the viewing screen (9).

16. The method as claimed in any one of claims 12 to 15,
**characterized in that,** when the aircraft (A) is turning:
- in step c), an auxiliary limit slope which corresponds to a maximum dive slope of the aircraft (A), at which it can descend before leveling out and then applying a full back stick climb with maximum power so as to be able to overfly said terrain (5) is moreover determined; and
- in step d), an auxiliary sign (29) representing this auxiliary limit slope is presented on the viewing screen (9).

17. The method as claimed in any one of claims 12 to 16,
**characterized in that,** when the aircraft (A) is turning and it is impossible to level out the aircraft (A), a corresponding alert signal is emitted.

18. The method as claimed in any one of claims 12 to 17,
**characterized in that,** when the aircraft (A) is turning, a roll indication (31) which indicates to the pilot the roll to be instructed so as to maintain a given trajectory is presented on the viewing screen (9).

19. The method as claimed in any one of claims 12 to 18,
**characterized in that:**
- in step a), a plurality of avoidance trajectories (T1 to T5) each exhibiting a different turn is determined;
- in step b), the profiles of the terrain (5) under these avoidance trajectories (T1 to T5) are determined;
- in step c), a plurality of first limit slopes associated respectively with said plurality of avoidance trajectories (T1 to T5) is determined; and
- in step d), a plurality of first characteristic signs (SC) representing respectively said plurality of first limit slopes are presented on the viewing screen (9), said slope scale being presented vertically and said first characteristic signs (SC) being presented horizontally one alongside the other depending on the direction and the value of the corresponding turn.

20. The method as claimed in any one of the preceding claims,
**characterized in that** said viewing screen (9) is a screen of a head-up viewing device.

21. The method as claimed in any one of the preceding claims,
**characterized in that** it is possible to remove the presentation of the first characteristic signs presented in step d).

22. A system for aiding the piloting of an aircraft flying at low altitude,
**characterized in that** it comprises:
- first means (2) for determining at least one avoidance trajectory (T1 to T5), at least over a predetermined distance (D) ahead of the aircraft (A), said avoidance trajectory (T1 to T5) corresponding to a low-altitude lateral trajectory and exhibiting at least one lateral turn (ϕ1 to ϕ5);
- second means (3) for determining the profile of the terrain (5) situated under this avoidance trajectory (T1 to T5);
- third means (6) for determining, depending on said profile of the terrain (5), at least one first limit slope corresponding to a slope that the aircraft (A) must fly so as to be able to overfly said terrain (5) over the whole of said predetermined distance (D) along said avoidance trajectory (T1 to T5); and
- display means (8) for presenting, on a viewing screen (9), at least one first characteristic sign (S1 to S5) which represents said first limit slope and which is associated with a slope scale (10), with which is also associated a symbol (11) illustrating the ground speed vector of the aircraft (A).

23. The system as claimed in claim 22,
**characterized in that** said third means (6) are formed so as to determine a first limit slope which corresponds to a minimum slope that the aircraft (A) must fly so as to be able to overfly said terrain (5) over the whole of said predetermined distance (D) along said avoidance trajectory (T1 to T5), independently of the performance of said aircraft (A).

24. The system as claimed in claim 23,
**characterized in that:**
- said system (1) comprises, moreover, fourth means (12) for determining at least one second limit slope corresponding to a maximum slope at which the aircraft can fly (A), depending on predetermined flight conditions and actual performance of said aircraft (A); and
- said display means (8) present, on the viewing screen (9), at least one second characteristic sign (C1 to C5) which represents said second limit slope and which is also associated with said slope scale (10).

25. The system as claimed in any one of claims 23 and 24,
**characterized in that:**
- said first means (2) determine a plurality of avoidance trajectories (T1 to T5) each exhibiting a different turn (ϕ1 to ϕ5);
- said second means determine the profiles of the terrain (5) under these avoidance trajectories (T1 to T5);
- said third means (6) determine a plurality of first limit slopes associated respectively with said plurality of avoidance trajectories (T1 to T5); and
- said display means (8) present, on the viewing screen (9), a plurality of first characteristic signs (S1 to S5) representing respectively said plurality of first limit slopes, said slope scale (10) being presented vertically and said first characteristic signs (S1 to S5) being presented horizontally one alongside the other depending on the direction and the value of the corresponding turn (ϕ1 to ϕ5).

26. The system as claimed in claims 24 and 25,
**characterized in that:**
- said fourth means (12) determine a plurality of second limit slopes associated respectively with said plurality of avoidance trajectories (T1 to T5); and
- said display means (8) present, on the viewing screen (9), a plurality of second characteristic signs (C1 to C5) representing respectively said plurality of second limit slopes, said second characteristic signs (C1 to C5) being presented horizontally one alongside the other depending on the direction and the value of the corresponding turn (ϕ1 to ϕ5) so that first and second characteristic signs which are associated with one and the same avoidance trajectory are situated horizontally at the same level.

27. The system as claimed in claim 22,
**characterized in that** said third means (6) are formed so as to determine a first limit slope which corresponds to a maximum dive slope of the aircraft (A) at which it can descend before applying a full back stick climb with maximum power so as to be able to overfly said terrain (5).

28. The system as claimed in any one of claims 22 to 27,
**characterized in that** said display means (8) comprise a head-up viewing device which comprises said viewing screen (9).

29. The system as claimed in any one of claims 22 to 28,
**characterized in that** it comprises, moreover, control means (22) making it possible to generate and to remove the presentation of the first characteristic signs (S1 to S5) on said viewing screen (9).

30. An aircraft,
**characterized in that** it comprises a system (1) capable of implementing the method specified under any one of claims 1 to 21.

31. An aircraft,
**characterized in that** it comprises a system (1) such as that specified under any one of claims 22 to 29.

## Patentansprüche

1. Verfahren zur Hilfe bei der Flugkontrolle eines tief fliegenden Flugzeugs (A),
**dadurch gekennzeichnet, dass** folgende Schritte automatisch und wiederholt durchgeführt werden:
a) Bestimmung wenigstens einer Ausweichflugbahn (T1 bis T5) mindestens über eine vorherbestimmte Distanz (D) vor dem Flugzeug (A), wobei diese Ausweichflugbahn (T1 bis T5) einer seitlichen Tiefflugbahn entspricht und wenigstens eine seitliche Flugkurve (ϕ1 bis ϕ5) aufweist;
b) Bestimmung des Profils des unter dieser Ausweichflugbahn (T1 bis T5) befindlichen Geländes (5);
c) abhängig von diesem Geländeprofil (5) Bestimmung wenigstens einer ersten Grenzneigung, die einer Neigung entspricht, die das Flugzeug (A) fliegen muss, damit es dieses Gelände (5) über die gesamte vorherbestimmte Distanz (D) entlang der Ausweichflugbahn (T1 bis T5) überfliegen kann; und
d) auf einem Bildschirm (9) für den Piloten vorgenommene Darstellung wenigstens eines ersten charakteristischen Zeichens (S1 bis S5, SC), das diese erste Grenzneigung darstellt und mit einer Neigungsskala (10) verbunden ist, mit der auch ein Symbol (11) verbunden ist, das den Fluggeschwindigkeitsvektor des Flugzeugs (A) über Grund abbildet.

2. Verfahren nach Anspruch 1,
**dadurch gekennzeichnet, dass** diese erste Grenzneigung einer Mindestneigung entspricht, die das Flugzeug (A) fliegen muss, damit es unabhängig von seinen Leistungswerten dieses Gelände (5) über die gesamte vorherbestimmte Distanz (D) entlang dieser Ausweichflugbahn (T1 bis T5) überfliegen kann.

3. Verfahren nach Anspruch 2,
**dadurch gekennzeichnet, dass:**
- in Verfahrensschritt c) außerdem wenigstens eine zweite Grenzneigung bestimmt wird, die einer vom Flugzeug (A) fliegbaren Höchstneigung entspricht, abhängig von vorherbestimmten Flugbedingungen und effektiven Leistungswerten dieses Flugzeugs (A); und
- in Verfahrensschritt d) auf dem Bildschirm wenigstens ein zweites charakteristisches Zeichen (C1 bis C5) dargestellt wird, das diese zweite Neigungsgrenze darstellt und ebenfalls mit der Neigungsskala (10) verbunden ist.

4. Verfahren nach Anspruch 3,
**dadurch gekennzeichnet, dass** sich diese vorherbestimmten Flugbedingungen auf einen Normalbetrieb aller Motoren/Triebwerke des Flugzeugs (A) beziehen.

5. Verfahren nach Anspruch 3,
**dadurch gekennzeichnet, dass** sich diese vorherbestimmten Flugbedingungen auf eine unterstellte Störung eines Motors/Treibwerks des Flugzeugs (A) beziehen.

6. Verfahren nach einem der Ansprüche 2 bis 5,
**dadurch gekennzeichnet, dass:**
- in Verfahrensschritt a) mehrere Ausweichflugbahnen (T1 bis T5) bestimmt werden, die jeweils eine unterschiedliche Flugkurve (ϕ1 bis ϕ5) aufweisen;
- in Verfahrensschritt b) die Profile des Geländes (5) unter diesen Ausweichflugbahnen (T1 bis T5) bestimmt werden;
- in Verfahrensschritt c) mehrere erste Grenzneigungen bestimmt werden, die jeweils mit diesen mehreren Ausweichflugbahnen (T1 bis T5) verbunden sind; und
- in Verfahrensschritt d) auf dem Bildschirm (9) mehrere erste charakteristische Zeichen (S1 bis S5) dargestellt werden, die diese mehreren ersten Grenzneigungen darstellen, wobei die Neigungsskala (10) senkrecht dargestellt wird und diese ersten charakteristischen Zeichen (S1 bis S5) waagerecht nebeneinander in Abhängigkeit von Richtung und Größe der entsprechenden Flugkurve (ϕ1 bis ϕ5) dargestellt werden.

7. Verfahren nach Anspruch 6,
**dadurch gekennzeichnet, dass** ferner:
- in Verfahrensschritt c) mehrere zweite Grenzneigungen bestimmt werden, die jeweils mit den mehreren Ausweichflugbahnen (T1 bis T5) verbunden sind; und
- in Verfahrensschritt d) auf dem Bildschirm (9) mehrere zweite charakteristische Zeichen (C1 bis C5) dargestellt werden, die diese mehreren zweiten Grenzneigungen darstellen, wobei diese zweiten charakteristischen Zeichen (C1 bis C5) waagerecht nebeneinander in Abhängigkeit von Richtung und Größe der entsprechenden Flugkurve (ϕ1 bis ϕ5) dargestellt werden, so dass sich erste und zweite charakteristische Zeichen, die mit einer gleichen Ausweichflugbahn verbunden sind, waagerecht jeweils auf der gleichen Ebene befinden.

8. Verfahren nach einem der Ansprüche 6 und 7,
**dadurch gekennzeichnet, dass** rechtskurvig verlaufende Ausweichflugbahnen und linkskurvig verlaufende Ausweichflugbahnen in gleicher Anzahl bestimmt werden.

9. Verfahren nach einem der Ansprüche 6 bis 8,
**dadurch gekennzeichnet, dass** so viele Ausweichflugbahnen berücksichtigt werden, dass sich wenigstens eine erste durchgehende Kurvenlinie (20B) erhalten lässt, die diese ersten charakteristischen Zeichen miteinander verbindet.

10. Verfahren nach Anspruch 7,
**dadurch gekennzeichnet, dass** so viele Ausweichflugbahnen berücksichtigt werden, dass sich wenigstens eine zweite durchgehende Kurvenlinie (19B) erhalten lässt, die diese zweiten charakteristischen Zeichen miteinander verbindet.

11. Verfahren nach einem der Ansprüche 6 bis 10,
**dadurch gekennzeichnet, dass:**
- für jede Ausweichflugbahn (T1 bis T5) eine Note bestimmt wird, die sich auf wenigstens ein vorherbestimmtes Kriterium bezieht;
- die so bestimmten Noten gegeneinander verglichen werden; und
- abhängig von diesem Vergleich eine dieser Ausweichflugbahnen ausgewählt wird, die hervorgehoben wird.

12. Verfahren nach Anspruch 1,
**dadurch gekennzeichnet, dass** diese erste Grenzneigung einer maximalen Sinkflugneigung des Flugzeugs (A) entspricht, mit der es hinab fliegen kann, bevor ein Wiederaufstieg mit voll gezogenem Steuerknüppel bei maximaler Leistung durchgeführt wird, so dass dieses Gelände (5) überflogen werden kann.

13. Verfahren nach Anspruch 12,
**dadurch gekennzeichnet, dass** das erste charakteristische Zeichen (SC), das diese erste Grenzneigung darstellt, an das Profil des Geländes (5) angepasst wird.

14. Verfahren nach einem der Ansprüche 12 und 13,
**dadurch gekennzeichnet, dass** ein Warnsignal ausgegeben wird, wenn dieses erste charakteristische Zeichen (SC) das den Fluggeschwindigkeitsvektor über Grund darstellende Symbol (11) erreicht.

15. Verfahren nach einem der Ansprüche 12 bis 14,
**dadurch gekennzeichnet, dass:**
- in Verfahrensschritt c) ferner die größte vom Flugzeug (A) fliegbare Steigflugneigung bestimmt wird; und
- in Verfahrensschritt d) auf dem Bildschirm (9) ein ergänzendes Zeichen (28) dargestellt wird, das diese größte Steigflugneigung darstellt.

16. Verfahren nach einem der Ansprüche 12 bis 15, **dadurch gekennzeichnet, dass** während des Kurvenflugs des Flugzeugs (A):
- in Verfahrensschritt c) ferner eine ergänzende Grenzneigung bestimmt wird, die einer maximalen Sinkflugneigung des Flugzeugs (A) entspricht, mit der es hinab fliegen kann, bevor die Tragflächen wieder gerade gestellt werden und dann ein Wiederaufstieg mit voll gezogenem Steuerknüppel bei maximaler Leistung durchgeführt wird, so dass dieses Gelände (5) überflogen werden kann; und
- in Verfahrensschritt d) auf dem Bildschirm (9) ein ergänzendes Zeichen (29) dargestellt wird, das diese ergänzende Grenzneigung darstellt.

17. Verfahren nach einem der Ansprüche 12 bis 16, **dadurch gekennzeichnet, dass** ein Warnsignal ausgegeben wird, wenn das Flugzeug (A) sich im Kurvenflug befindet und eine Geradestellung der Tragflächen des Flugzeugs (A) unmöglich ist.

18. Verfahren nach einem der Ansprüche 12 bis 17, **dadurch gekennzeichnet, dass** während des Kurvenflugs des Flugzeugs (A) auf dem Bildschirm (9) eine Rollanzeige (31) dargestellt wird, die dem Piloten die zur Einhaltung einer gegebenen Flugbahn einzuleitende Rollbewegung anzeigt.

19. Verfahren nach einem der Ansprüche 12 bis 18,
**dadurch gekennzeichnet, dass:**
- in Verfahrensschritt a) mehrere Ausweichflugbahnen (T1 bis T5) bestimmt werden, die jeweils eine andere Flugkurve darstellen;
- in Verfahrensschritt (b) die Profile des unter diesen Ausweichflugbahnen (T1 bis T5) befindlichen Geländes (5) bestimmt werden;
- in Verfahrensschritt c) mehrere erste Grenzneigungen bestimmt werden, die mit diesen mehreren Ausweichflugbahnen (T1 bis T5) jeweils verbunden sind; und
- in Verfahrensschritt d) auf dem Bildschirm (9) mehrere erste charakteristische Zeichen (SC) dargestellt werden, die diese mehreren ersten Grenzneigungen jeweils darstellen, wobei die Neigungsskala senkrecht dargestellt wird und diese ersten charakteristischen Zeichen (SC) waagerecht nebeneinander in Abhängigkeit von Richtung und Größe der entsprechenden Flugkurve dargestellt werden.

20. Verfahren nach einem der vorhergehenden Ansprüche,
**dadurch gekennzeichnet, dass** dieser Bildschirm (9) ein Display eines Head-Up-Bildschirmgerätes ist.

21. Verfahren nach einem der vorhergehenden Ansprüche,
**dadurch gekennzeichnet, dass** die Darstellung der in Verfahrensschritt d) dargestellten ersten charakteristischen Zeichen unterdrückt werden kann.

22. System zur Hilfe bei der Flugkontrolle eines tief fliegenden Flugzeuges,
**dadurch gekennzeichnet, dass** es Folgendes umfasst:
- erste Mittel (2) zur Bestimmung wenigstens einer Ausweichflugbahn (T1 bis T5) mindestens über eine vorherbestimmte Distanz (D) vor dem Flugzeug (A), wobei diese Ausweichflugbahn (T1 bis T5) einer seitlichen Tiefflugbahn entspricht und wenigstens eine seitliche Flugkurve (ϕ1 bis ϕ5) aufweist;
- zweite Mittel (3) zur Bestimmung des Profils des unter dieser Ausweichflugbahn (T1 bis T5) befindlichen Geländes (5);
- dritte Mittel (6) zur geländeprofilabhängigen Bestimmung wenigstens einer ersten Grenzneigung, die einer Neigung entspricht, die das Flugzeug (A) fliegen muss, damit es dieses Gelände (5) über die gesamte vorherbestimmte Distanz (D) entlang der Ausweichflugbahn (T1 bis T5) überfliegen kann; und
- Anzeigemittel (8) für die auf einem Bildschirm (9) erfolgende Darstellung wenigstens eines ersten charakteristischen Zeichens (S1 bis S5), das diese erste Grenzneigung darstellt und mit einer Neigungsskala (10) verbunden ist, mit der auch ein Symbol (11) verbunden ist, das den Fluggeschwindigkeitsvektor des Flugzeugs (A) über Grund abbildet.

23. System nach Anspruch 22,
**dadurch gekennzeichnet, dass** diese dritten Mittel (6) so ausgebildet sind, dass sie eine erste Grenzneigung bestimmen, die einer Mindestneigung entspricht, die das Flugzeug (A) fliegen muss, damit es dieses Gelände (5) entlang dieser Ausweichflugbahn (T1 bis T5) über die gesamte vorherbestimmte Distanz (D) unabhängig von den Leistungswerten des Flugzeuges
(A) überfliegen kann.

24. System nach Anspruch 23,
**dadurch gekennzeichnet, dass:**
- dieses System (1) ferner vierte Mittel (12) zur Bestimmung wenigstens einer zweiten Grenzneigung umfasst, die einer vom Flugzeug (A) fliegbaren Höchstneigung entspricht, abhängig von vorherbestimmten Flugbedingungen und effektiven Leistungswerten dieses Flugzeugs (A); und
- diese Anzeigemittel (8) auf dem Bildschirm wenigstens ein zweites charakteristisches Zeichen (C1 bis C5) darstellen, das diese zweite Neigungsgrenze darstellt und ebenfalls mit der Neigungsskala (10) verbunden ist.

25. System nach einem der Ansprüche 23 und 24,
**dadurch gekennzeichnet, dass:**
- diese ersten Mittel (2) mehrere Ausweichflugbahnen (T1 bis T5) bestimmen, die jeweils eine unterschiedliche Flugkurve (ϕ1 bis ϕ5) aufweisen;
- diese zweiten Mittel die Profile des Geländes (5) unter diesen Ausweichflugbahnen (T1 bis T5) bestimmen;
- diese dritten Mittel (6) mehrere erste Grenzneigungen bestimmen, die mit den mehreren Ausweichflugbahnen (T1 bis T5) jeweils verbunden sind; und
- diese Anzeigemittel (8) auf dem Bildschirm (9) mehrere erste charakteristische Zeichen (S1 bis S5) darstellen, die diese mehreren ersten Grenzneigungen jeweils darstellen, wobei die Neigungsskala (10) senkrecht dargestellt wird und diese ersten charakteristischen Zeichen (S1 bis S5) waagerecht nebeneinander in Abhängigkeit von Richtung und Größe der entsprechenden Flugkurve (ϕ1 bis ϕ5) dargestellt werden.

26. System nach Anspruch 24 und Anspruch 25,
**dadurch gekennzeichnet, dass:**
- diese vierten Mittel (12) mehrere zweite Grenzneigungen bestimmen, die jeweils mit den mehreren Ausweichflugbahnen (T1 bis T5) verbunden sind; und
- diese Anzeigemittel (8) auf dem Bildschirm (9) mehrere zweite charakteristische Zeichen (C1 bis C5) darstellen, die jeweils diese mehreren zweiten Grenzneigungen darstellen, wobei diese zweiten charakteristischen Zeichen (C1 bis C5) waagerecht nebeneinander in Abhängigkeit von Richtung und Größe der entsprechenden Flugkurve (ϕ1 bis ϕ5) dargestellt werden, so dass sich erste und zweite charakteristische Zeichen, die mit einer gleichen Ausweichflugbahn verbunden sind, jeweils waagerecht auf der gleichen Ebene befinden.

27. System nach Anspruch 22,
**dadurch gekennzeichnet, dass** diese dritten Mittel (6) zur Bestimmung einer ersten Grenzneigung ausgebildet werden, die einer maximalen Sinkflugneigung des Flugzeugs (A) entspricht, mit der es hinab fliegen kann, bevor ein Wiederaufstieg mit voll gezogenem Steuerknüppel bei maximaler Leistung durchgeführt wird, so dass dieses Gelände (5) überflogen werden kann.

28. System nach einem der Ansprüche 22 bis 27,
**dadurch gekennzeichnet, dass** diese Anzeigemittel (8) ein Head-Up-Bildschirmgerät umfassen, das diesen Bildschirm (9) beinhaltet.

29. System nach einem der Ansprüche 22 bis 28,
**dadurch gekennzeichnet, dass** es ferner Bedienmittel (22) beinhaltet, durch die die Darstellung der ersten charakteristischen Zeichen (S1 bis S5) auf diesem Bildschirm (9) ausgelöst oder unterdrückt werden kann.

30. Flugzeug,
**dadurch gekennzeichnet, dass** es ein System (1) beinhaltet, das das in einem der Ansprüche 1 bis 21 beschriebene Verfahren ausführen kann.

31. Flugzeug,
**dadurch gekennzeichnet, dass** es ein System (1) beinhaltet, wie dieses in einem der Ansprüche 22 bis 29 beschrieben ist.
